# EUROPEAN PATENT APPLICATION

(11) **EP 2 234 054 A1**
(43) Date of publication of application: **29.09.2010**
(21) Application number: 09156470.8
(22) Date of filing: 27.03.2009
(51) Int. Cl.: G06Q 10/00

(54) **A method for providing a web package within a manufacturing executing system**

(71) Applicant: SIEMENS AKTIENGESELLSCHAFT, 80333 München (DE)
(72) Inventor: Giusti, Nadia, 16043, Chiavari (IT)
(74) Representative: Fischer, Michael

(57) **Abstract**

It is an objective of the present invention to provide a method for providing a web package within a manufacturing executing system in a way that the web package is authentic and in a closed format.

The objective is achieved according to the present invention by a method for providing a web package within a manufacturing executing system (MES), wherein the web package comprises web application content, comprising the steps of:
a) generating the web package by:
i) sorting the web application content according to a predefined structure,
ii) compressing the sorted web application content into a first compressed file, such as a first zip-File;
iii) concatenating the content of the first compressed file with a digital signature;
iv) compressing the signed content into a second compressed file, such as a second zip-File; and
v) encrypting the second compressed file;

b) presenting the generated web package for download to other users connected to the manufacturing execution system.

This method thus enables the provider of the manufacturing execution system to broadcast web packages over the network and enabling each trusted user to open the web package and specify the content of web package to be either applied on the user environment and/or to be shown within the user's environment.

## Description

The present invention relates to a method for providing a web package within a manufacturing executing system.

As it is well known, a method for scheduling manufacturing processes planned by an Enterprise Resource Planning (ERP) and produced by a shop floor, provides a Manufacturing Executing System (MES) for scheduling and implementing the scheduled manufacturing processes and controlling the corresponding production steps at plant floor.

In particular, the Enterprise Resource Planning (ERP) is a system including hardware devices and corresponding software applications for planning the business resources of an enterprise, i.e. material provisions, human resource managements, purchasing, orders, profits, finance, inventory controls, customer managements, etceteras, while the term "shop floor" has been used to indicate a system supporting the control of single machines involved in the manufacturing processes, for example by measuring the number of pieces produced per hour by each machine or the functioning parameters thereof, the quality of the pieces produced and so on.

MES is an intermediate layer providing computing machines and software tools between the ERP upper layer and the shop floor lower layer, including a software tool for production order management, which receives requests of production from the ERP, and a software tool for production modeling, which supports the phases of selecting and managing the resources to be involved in the manufacturing processes, i.e. employees, machines and materials, in order to realize a planned manufacturing process within required time constrains.

Therefore, manufacturing execution systems require modeling plant equipment for both scheduling and controlling activities. More particular, the manufacturing execution systems require reliable instruments in order to exchange web applications over the distributed multi-client architecture which is usually present in an ordinary manufacturing environment.

Typically, a web package is a compressed file that contains web application contents in the form of web pages, user controls, scripts, class library, images, lay-out information and any further element referring to an ASP.NET web application. With the use of the web package it is possible to create a compressed, encrypted and self-descriptive web package. Further, the deployment of its content by an administrative console can be regulated and the entire integration of its contents inside a web application can be controlled.

A web package usually comprises a multitude of functionalities and can have a dependency on other web packages. During the engineering phase a web administrator is to decide which web packages have to be installed according to customer needs. A specialized application displays the dynamic content of the web package. These contents are closed into the web package and virtually provided by the web application.

The fundamental technical requirements for web package in a manufacturing execution environment are the following:
a) The web package should be in a closed format;
b) Its authenticity must be guaranteed entirely; and
c) The content of the web package must be provided by a web application.

These implications require that the web package content must be encrypted, and in order to ensure that the content cannot be modified by adding, deleting or altering its content (pages, controls ...), the web package must be hashed, too.

So far, the use of the content of the web package is enabled by a web content that is present on the file system. Unfortunately, it is not possible to distribute web contents when still encrypted and to select which of the content shall be shown or not.

It is therefore an objective of the present invention to provide a method for providing a web package within a manufacturing executing system in a way that the web package is authentic and in a closed format.

The objective is achieved according to the present invention by a method for providing a web package within a manufacturing executing system (MES), wherein the web package comprises web application content, comprising the steps of:
a) generating the web package by:
   i) sorting the web application content according to a predefined structure,
   ii) compressing the sorted web application content into a first compressed file, such as a first zip-File;
   iii) concatenating the content of the first compressed file with a digital signature;
   iv) compressing the signed content into a second compressed file, such as a second zip-File; and
   v) encrypting the second compressed file;
b) presenting the generated web package for download to other users connected to the manufacturing execution system.

This method thus enables the provider of the manufacturing execution system to broadcast web packages over the network and enabling each trusted user to open the web package and specify the content of web package to be either applied on the user environment and/or to be shown within the user's environment.

In a preferred embodiment of the present invention, the defined structure comprises a manifest describing the entire content of the web package and comprising data for an installation and deployment process. The manifest therefore is like the wanted poster for the web package disclosing any required information in order to be enabled to use the content of the web package in its intended form.

A further preferred embodiment may provide an access to the content of the web package by a class library available within the manufacturing execution system, in particular according to .NET Framework..NET includes the class library in order to encapsulate a large number of common functions, such as file reading and writing, graphic rendering, database interaction, and XML document manipulation, which makes the programmer's job easier.

In particular, it is consequentially preferred with the manifest to have a predefined structure itself. Therefore, the manifest having a predefined schema comprising a header content, an activation dependency content, an assembly reference section, an application settings section, a portal page section and a post-installation action section. The content of these sections and their detailed designation within the manifest are describe in more detail with respect to some preferred embodiments of the present invention.

In order to validate the correct generation of the web package, a package validation step can be established checking whether the manifest follows the predefined schema. In order to deliver the required information for this validation step, the web package itself comprises a schema file.

Preferred embodiments of the present invention are described hereinafter more detailed with reference to the following drawings which depict in:.

### Brief description of the drawings

- Figure 1: schematically the structure of a web package;
- Figure 2: schematically a CAB package Add-In used within the Core Application Builder layer of a manufacturing execution system (MES);
- Figure 3: schematically the package detail and the activities rendered upon these details within the CAB environment of the MES; and
- Figure 4: schematically an example of a web-content in the form of package, here a Shift Calendar Manager Web package within the MES.

### Detailed description

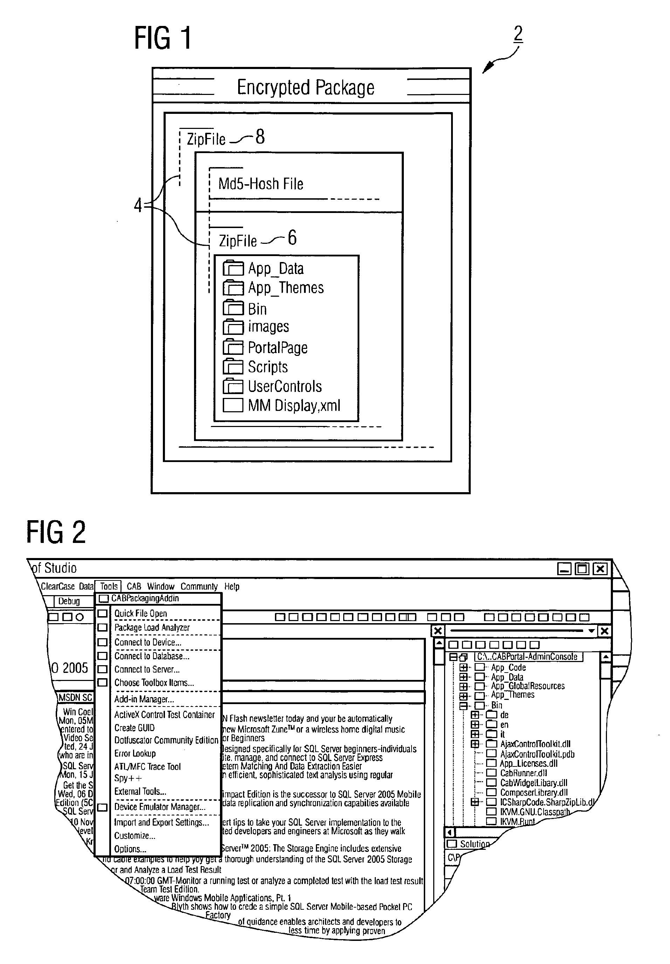

As shown in Figure 1, a web package 2 comprises basically a sequence of nested compressed files having a predetermined structure 4 similar to an ordinary file system. The web package 2 is a sort of a first zipped file 6 which contains the predetermined structure 4 as a fixed structure. To guarantee the authenticity this first zipped file 6 is concatenated with its hash signature. The hashed content is then zipped again to a second zipped file 8. Finally, this second zipped file 8 is encrypted.

The content of the inner .swf-File related to the predetermined structure 4 is the follow:
- App_Data
- App_Themes
- Bin
- Images
- PortalPage
- Scripts
- UserControls
- Manifest File

The manifest file section is an xml file that describes the entire content of the web package 2 and gives the complete information for installation and deployment process. The access to the contents of the web package 2 is provided by a dedicated class library.

### The Package Manifest

File heading section contains package specific attributes that describes it in detail.
- Id: unique Guid for the web package.
- Name: the package descriptive name.
- PackageFileName: the package file name.
- Scope: Web or WebFarm.
- Hidden: True if the package is installed but remains disabled, otherwise false.
- AlwaysForceInstall: for future use.
- Version: the file version (following the standard build internal incremental numbering).
- ImageUrl: the image URL that will be displayed in conjunction with the web package details.
- Description: a free package text description.

An example for the file heading section is given below:

```
 <module
    id="922ea6ae-27ab-478f-af67-19fb597d8721"
    Mame="MM"
    PackageFileName="MM.zip"
    Scope="Web"
    Hidden="FALSE"
    AlwaysForceInstall="TRUE"
    Version="1.0.0.0"
    ImageUr1="images\mm.gif"
    Description="Package di esempio"
    xmlns="http://schemas.siemens.com/CABPortal/Module/">
```

An ActivationDependencies section contains only one element that represents web packages from which the current one depends on. The attribute used are the name and GUID for the web package.

```
 <ActivationDependencies>
    <ActivationDependency Namee="Common" id="69942gg7-8Ar2-
    4204-9w3r-8ytr7jhuik37"/>
 </ActivationDependencies>
```

An AssemblyReferences section contains Assembly names that will be added to the configuration file of the target application.

```
 <AssemblyReferences>
    <AssemblyName Name="Cab.Import, Version=1.0.0.1,
    Culture=neutral, PublicKeyToken=A25DDDB5F077262E"/>
    <AssemblyName Name="SITFndLEAN, Version=1.0.8.0,
    Culture=neutral, PublicKeyToken=A25DDDB5F077262E"/>
 </AssemblyReferences>
```

An AppSettings section contains appKeys that will be added to the configuration file of the target application.

```
 <AppSettings>
    <AppKey Name="SolutionHost" Value="localhost"/>
 </AppSettings>
```

In the section relative to the Bin folder are listed the libraries that will be copied in the target folder, like in the example below.

```
 <PackageFolder Name="Bin" TargetFolderName="Bin">
    <Packageltem TargetFileName="BREADBase.d11"/>
    <PackageItem
 TargetFrleName="SITCAB.BREADAttributes.d11"/>
    <PackageItem TargetFileName-"SITCAB.Credential.d11"/>
 </PackageFolder>
```

In the following section, the contents of the Images folder that will be served virtually (not copied in the target application folder) is shown.

```
 <PackageFolder Name= Images" TargetFolderName="Images ">
    <PackageItem TargetFileName="AddButton.gif"/>
    <PackageItem TargetFileName="Area.gif"/>
    <PackageItem TargetFileName="BPM.gif"/>
    <PackageItem
 TargetFileName="Calendar_scheduleHS.png"/>
    <PackageItem TargetFileName="Cell.gif"/>
 </PackageFolder>
```

In a PortalPage section are listed the web pages (with code-behind) that will be inserted into the web application site map, stored in the web application database. The attributes are:
- InsertIntoNavigation: indicates that the page must be inserted into the site map and will be visible in the web application navigation items.
- NavigationTitle: the web page title.
- NavigationRole: users category to which the page is visible.
- NavigationVisible: this attribute indicates if the page is hidden or visible in the site map.
- ImageUrl: the image associated with the page shown in the portal navigation items.

A PostInstallActions section manages the creation of a folder on the target application file system or the execution of scripts.

In particular the attributes:
- Type: can be *CreateFolder* (folder creation on file system) or *ExecuteScript* (run a script file).
- TargetFolderName: the name of the folder that has to be created (full physical path) or an indication of the location in which exists the file to run.
- TargetFileName: the script file name, empty in case of Type=CreateFolder
- Description: a free description of the action.

```
 <PostInstallActions>
    <PostInstallAction
    Name="CreateFolderAction"
    Type="CreateFolder"
    TargetFolderName="folderpath\name"
    TargetFileName=""
    Description="Post install action: create folder."/>
    PostInstallActionName="ExecuteScriptAction"
    Type="ExecuteScript"
    TargeFolderName="App_Data\TestFolder"
    TargetFileName="batfile.bat"
    Description="Post install action: execute script."/>
 </PostInstallActions>
```

The manifest file has to be compliant with a defined schema and a step of the package validation process is checking if the manifest follows the schema. The schema file is contained inside the web package 2.

The main advantages on using this web package are to provide web contents as web pages, images, scripts, etc to users in a form of a single file instead of a complex web application. Moreover, developer users can produce, in easy way, owns web packages and share them with others users without being obliged to spend a lot of time to install and/or to configure web applications contained in the web package. The only required activity is to copy the web package file into the selected data repository.

One of the first application that will benefit from this new feature is the Siemens® SIMATIC® IT Portal which is used to distribute content (i.e. component display in web-format), protected and encrypted, in the form of single file shared between different SIMATIC content repositories. The main packaging actors are the following:
1. A Visual studio add-in specifically developed for the creation of the web packages;
2. The SIMATIC IT CAB Administration Console as the primary interface to the user for the installation of the web package; and
3. The SIMATIC IT CAB Portal to provide the content of the web package by a virtual path provider.

### SIMATIC® IT CAB Portal Packaging Add-In

To explain in short words the background of SIMATIC® IT, the ISA-95 standard has to be mentioned. ISA-95 is increasingly accepted as the world standard for Manufacturing Execution Systems that customers can rely upon. SIMATIC® IT not only covers ISA-95 functionalities but also actually uses ISA-95 as a blueprint for its product architecture. Siemens Aktiengesellschaft, the owner of SIMATIC® IT, is an active member of the ISA-95 committee to contribute to its continuing development.

SIMATIC® IT itself is a collection of software components representing Siemens' proposition for Manufacturing Execution Systems (MES). SIMATIC IT is uniqueness is represented by its entire architecture, designed using ISA-95 as an architectural blue print for the implementation. SIMATIC® IT Production Modeler enables the definition of the Plant Model and of all the Standard Operating Procedures (in terms of rules) in a fully graphical environment. SIMATIC® IT components physically execute the actions defined in these rules.

SIMATIC® IT Client Application Builder (CAB) is the native, web-based graphical user interface for building cross-functionality graphic screens. The Client Application Builder (CAB) is fully based on Microsoft® ASP.NET technology.

Simatic® IT software solution for the manufacturing execution system, a CAB Portal Administration Console assists the web administrator in displaying available packages information, installing/uninstalling the package in several target CAB Portal applications and managing update of a previously installed package into a new version.

The creation of web packages is made user-friendly by a Visual Studio 2008 Add-in, named SIMATIC IT CAB Portal Packaging Add-In developed in the form of a wizard. This tool scans the content of a Visual Studio Solution, specifically the Website active into the solution at the moment, and suggests some choices to the user. For example .dll, user controls, aspx pages to add to the package for customize the portal functionalities. At each step of wizard the manifest xml section is filled with the user's choices. Figure 2 is illustrating schematically the screen-shot of the CAB Packaging Add-In.

### SIMATIC IT CAB Administrative Console

The SIMATIC IT CAB administrative console is a web application that helps web administrators to make easier and faster the setup of the SIMATIC IT CAB Portal. It provides a user-friendly environment to manage web packages without introducing engineering effort and reducing significantly the development time. It enables an easy maintenance of SIMATIC IT CAB Portal-based solutions, providing an environment that facilitates the customer maintenance and administrative tasks.

The main functionalities provided are:
- Visualization of available web packages;
- Selection of a web package to display descriptive information;
- Install/uninstall a web package;
- Update a package installation to a new version;
- Enable/Disable a web package; and
- Support for multiple SIMATIC IT CAB Portal application.

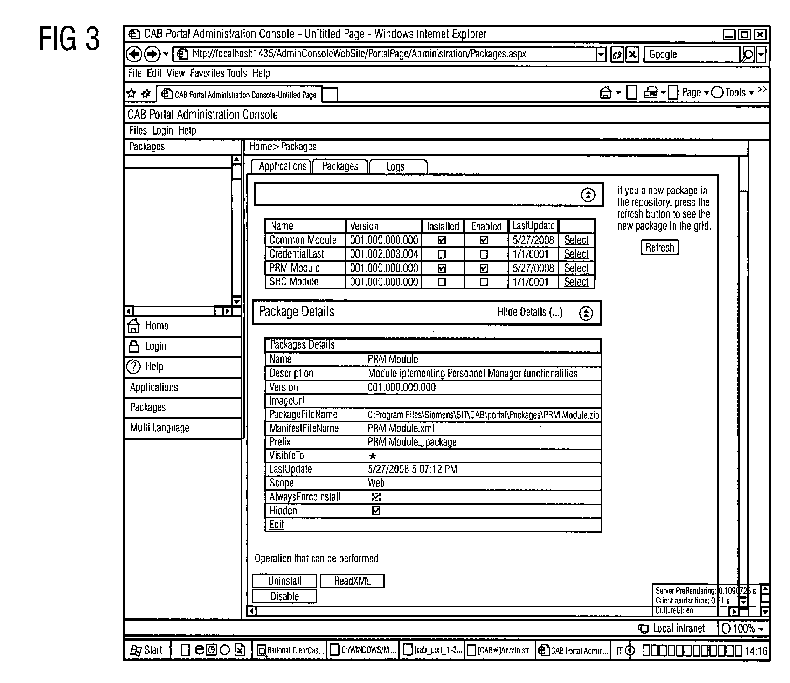

Figure 3 illustrates the details of the web package and the respective actions that can be performed on it.

### SIMATIC IT CAB Portal

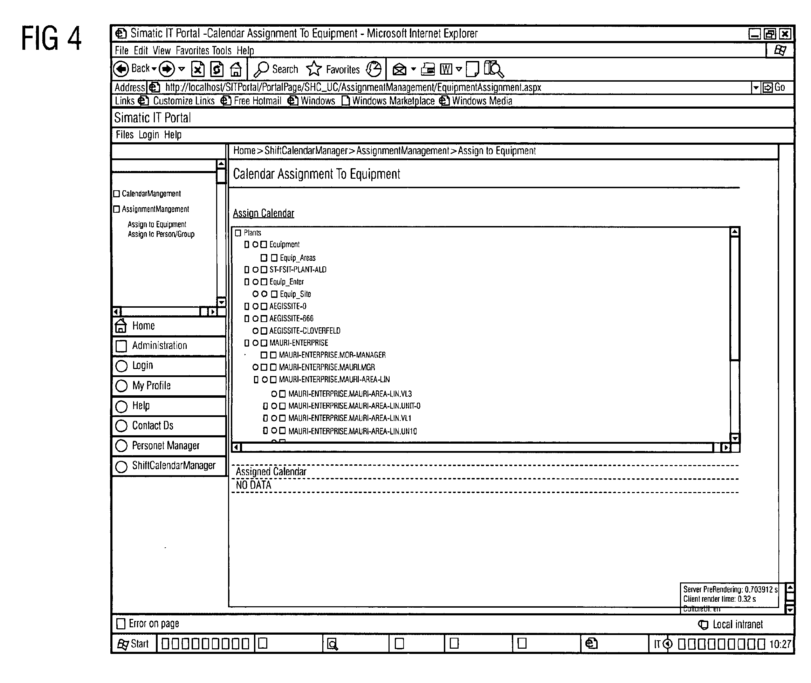

The SIMATIC IT CAB Portal is a web application that provides users with a full environment and a predefined set of functionalities that support a rapid GUI web application development based on SIMATIC IT projects. The SIMATIC IT CAB Portal has integrated user management functionalities, user profiling, multi-language and theme selection supports. The SIMATIC IT CAB Portal is the infrastructure able to provide the contents contained in the web packages, inserting them in the navigation and making them accessible as standard dynamic web pages. Several packages can be included in the portal, from the one developed with the SIMATIC IT products to the custom content developed by/for the customer. Figure 4 shows an example of a web-content in the form of web package that is dedicated to a Shift Calendar Manager Web package.

## Claims

1. A method for providing a web package (2) within a manufacturing executing system (MES), wherein the web package comprises web application content, comprising the steps of:
a) generating the web package by:
i) sorting the web application content according to a predefined structure,
ii) compressing the sorted web application content into a first compressed file;
iii) concatenating the content of the first compressed file with a digital signature;
iv) compressing the signed content into a second compressed file; and
v) encrypting the second compressed file;
b) presenting the generated web package for download to other users connected to the manufacturing execution system.

2. The method according to claim 1 wherein the defined structure comprises a manifest describing the entire content of the web package and comprising data for an installation and deployment process.

3. Method according to claim 1 or 2, wherein an access to the content of the web package is provided by a class library available within the manufacturing execution system.

4. Method according to any of the preceding claims, wherein the manifest having a predefined schema comprising a header content, an activation dependency content, an assembly reference section, an application settings section, a portal page section and a post-installation action section.

5. Method according to claim 4, wherein during a package validation step is checked whether the manifest follows the predefined schema.

6. Method according to any of the preceding claims, wherein the web package comprises a schema file.
